# FASCICULE DE BREVET EUROPEEN

(11) **EP 1 111 226 B1**
(45) Date de publication et mention de la délivrance du brevet: **29.12.2004**
(21) Numéro de dépôt: 00402995.5
(22) Date de dépôt: 27.10.2000
(51) Int. Cl.: F02K 9/46, F02K 9/50, F04B 17/04, F04B 43/04, F04B 43/067, F02C 7/047, B64D 15/04

(54) **Dispositif d'évacuation d'air chaud pour capot d'entrée d'air de moteur à réaction, à circuit de dégivrage**
Heissluftabfuhrvorrichtung für die Lufteinlasshaube eines Strahltriebwerkes mit Enteisungskreislauf
Hot air exhaust device for a jet engine air intake fairing with de-icing circuit

(30) Priorité: 21.12.1999 FR 9916155
(43) Date de publication de la demande: 27.06.2001
(73) Titulaire: AIRBUS France, 31060 Toulouse (FR)
(72) Inventeur: Porte, Alain, 31770 Colomiers (FR); Viala, Stéphane, 31380 Montjoire (FR)
(74) Mandataire: Hauer, Bernard

(56) Documents cités:
- EP-A- 0 536 089
- EP-A- 0 921 293
- US-A- 3 933 327
- US-A- 4 757 963
- US-A- 4 782 658

## Description

La présente invention concerne le dégivrage des capots d'entrée d'air de moteurs à réaction, notamment des moteurs d'aéronefs.

On sait que, en cas de besoin (prévention contre la formation de givre ou élimination de givre déjà formé), le bord d'attaque du capot d'entrée d'air de tels moteurs est dégivré par réchauffement par de l'air chaud sous pression, prélevé sur ledit moteur et amené audit bord d'attaque par un circuit de circulation d'air chaud.

A cet effet, un tel capot d'entrée d'air comporte :
- un bord d'attaque creux délimitant une chambre périphérique interne, fermée par une cloison interne (ou cadre) et pourvue d'orifices mettant en communication ladite chambre interne avec l'extérieur ; et
- une conduite, apte à être raccordée, à son extrémité arrière opposée audit bord d'attaque, audit circuit de circulation d'air chaud et, à son extrémité avant vers le bord d'attaque, à un injecteur injectant ledit air chaud dans ladite chambre interne.

Ainsi, l'air chaud sous pression injecté par ledit injecteur parcourt ladite chambre périphérique interne en la réchauffant et est évacué à travers lesdits orifices.

Par le document US-A-5 365 731, on connaît déjà un capot d'entrée d'air de ce type comportant une pluralité de tels orifices d'évacuation de l'air chaud, pratiqués directement dans le bord d'attaque dudit capot, le débit d'air chaud de dégivrage étant contrôlé par la section desdits orifices. Un tel capot d'entrée d'air connu présente les inconvénients majeurs de fragiliser le bord d'attaque dudit capot (qui se trouve être l'élément le plus vulnérable d'une nacelle de moteur, car situé frontalement, et être difficilement réparable à cause de sa grande taille) et de dégrader de façon importante les performances aérodynamiques dudit capot. En effet, en ce qui concerne ce dernier inconvénient, lesdits orifices sont situés dans une forme de bord d'attaque favorisant l'écopage --et donc rendant difficile l'éjection d'air chaud-- et ceci durant toutes les phases de vol de l'aéronef lorsque le dégivrage ne fonctionne pas. De plus, les orifices d'éjection produisent une surface d'éjection importante, ce qui engendre une traînée sur une large portion du bord d'attaque, cette traînée étant accentuée par le fait que la surface de la nacelle, immédiatement en aval de cette surface aérodynamiquement polluée, se retrouve généralement elle aussi très perturbée, de sorte qu'elle engendre une traînée supplémentaire. Par ailleurs, dans un tel capot d'entrée d'air connu, il est difficile de corriger la section d'éjection durant des essais en vol, puisque cette section est constituée par des orifices pratiqués dans une pièce (le bord d'attaque) de grande dimension.

Par ailleurs, par le document EP-A-0 205 283, on connaît un capot d'entrée d'air dans lequel ladite conduite d'alimentation en air chaud sous pression est entourée par une structure métallique enveloppante comportant une tuyauterie dont l'extrémité libre forme un orifice servant à l'éjection de l'air de dégivrage en arrière du bord d'attaque dudit capot. On évite alors les inconvénients précédents, mais dans ce dispositif connu, le contrôle du débit d'air chaud est obtenu par la section de ladite tuyauterie d'éjection, ainsi que par l'orientation d'ailettes disposées à l'extrémité libre de celle-ci. Il en résulte une mauvaise maîtrise du débit d'éjection et des nappes d'air chaud à l'extérieur. De plus, l'éjection de l'air chaud est très concentrée, ce qui peut endommager des structures voisines, sensibles à la chaleur. De toutes façons, un tel dispositif est la source d'un rayonnement thermique important, risquant également d'endommager lesdites structures. Enfin, le dispositif est onéreux, car constitué de pièces nombreuses devant être assemblées à l'aide de joints à durée de vie limitée, car soumis à des températures élevées.

On connaît également, par exemple par le document GB-A-2 259 679, un capot d'entrée d'air dans lequel l'air chaud de dégivrage est évacué à l'extérieur par une tuyauterie coudée, traversant ladite cloison interne, pour éjecter l'air chaud en arrière dudit bord d'attaque. Là encore, le débit d'air chaud est contrôlé par la section de la tuyauterie et par l'orientation d'ailettes disposées dans celle-ci. On retrouve donc dans ce capot d'entrée d'air les mêmes inconvénients que ceux mentionnés ci-dessus, à propos du document EP-A-0 205 283.

Enfin, le document EP-A-0 536 089 montre un capot d'entrée d'air dans lequel ladite cloison interne est pourvue d'un conduit en forme d'auge, dirigé vers l'arrière du bord d'attaque et ouvert en direction de la périphérie dudit capot d'entrée d'air. Le conduit en forme d'auge est obturé par une plaque percée d'une multitude d'orifices rectangulaires identiques, dont la direction est orthogonale au bord d'attaque, lesdits orifices étant alignés parallèlement à ce dernier.

Grâce à cette disposition, lesdits orifices, qui servent à évacuer vers l'extérieur l'air chaud sous pression ayant réchauffé ledit bord d'attaque, peuvent se trouver dans la partie dudit capot disposée juste en arrière dudit bord d'attaque. Il en résulte donc que le bord d'attaque, qui est une pièce sensible du point de vue aérodynamique pour les performances du moteur et du point de vue de la maintenance, car exposée à des chocs divers, n'est pas fragilisé par lesdits orifices. Cependant, une telle disposition ne permet pas d'optimiser, ni aérodynamiquement, ni thermiquement, ni acoustiquement l'éjection de l'air chaud de dégivrage, notamment à cause du fait:
- que les jets d'air chaud traversant lesdits orifices rectangulaires ont tendance à se regrouper en aval de ladite plaque, ce qui engendre une traînée aérodynamique importante et nuit au refroidissement desdits jets (dont le rayonnement thermique risque ainsi de brûler la surface extérieure --généralement en matériau composite-- dudit capot en aval de ladite plaque) ; et
- que les jets d'air chaud traversant les orifices rectangulaires latéraux s'évasent latéralement et brûlent la surface latérale, également en matériau composite, dudit capot disposée latéralement à ladite plaque.

Par ailleurs, de tels orifices engendrent des bruits aérodynamiques, des sifflements, etc ...

Par le document EP-A-0 921 293, on connaît un capot d'entrée d'air qui est muni d'un bord d'attaque creux, d'une conduite d'air chaud et d'une pièce de calibrage. Ce document connu enseigne de pratiquer un orifice unique, de forme oblongue, dans ladite pièce de calibrage qui s'étend longitudinalement, pour permettre l'éjection de l'air chaud hors dudit capot.

La présente invention a pour objet de remédier aux inconvénients précités.

A cette fin, selon l'invention, le capot d'entrée d'air pour moteur à réaction, notamment pour aéronef, ledit capot d'entrée d'air étant pourvu, à l'avant, de moyens de dégivrage de son bord d'attaque et comportant à cet effet :
- un bord d'attaque creux délimitant une chambre périphérique interne qui est fermée par une cloison interne, ladite cloison interne étant pourvue d'un conduit en forme d'auge, dirigé vers l'arrière dudit bord d'attaque et ouvert en direction de la périphérie dudit capot d'entrée d'air ;
- une conduite, apte à être raccordée, à son extrémité arrière opposée audit bord d'attaque, à un circuit d'air chaud sous pression et, à son extrémité avant vers ledit bord d'attaque, à un injecteur injectant ledit air chaud sous pression dans ladite chambre interne ; et
- une pièce de calibrage réalisée en un matériau résistant aux températures élevées et faisant partie de la surface externe dudit capot, en arrière dudit bord d'attaque, ladite pièce obturant ledit conduit en forme d'auge et étant percée d'orifices pour mettre ladite chambre interne en communication avec l'extérieur, lesdits orifices formant un agencement (18), et étant répartis au moins sensiblement parallèlement audit bord d'attaque et servant à calibrer le flux d'air chaud sous pression éjecté par ledit conduit en forme d'auge, tout en écartant dudit capot les jets d'air chaud sous pression résultant du passage dudit flux d'air chaud à travers lesdits orifices,
est remarquable en ce que l'aire de chaque orifice dépend de la position de celui-ci dans ledit agencement, cette aire étant variable en fonction de la position plus ou moins latérale dans l'agencement dudit orifice, et en ce que ladite pièce de calibrage s'étend longitudinalement dans ladite surface externe dudit capot, vers l'arrière de celui-ci, pour servir de protection thermique audit capot vis-à-vis desdits jets d'air chaud traversant lesdits orifices.

Ainsi, lesdits orifices forment un agencement tel que au moins deux jets d'air chaud sous pression traversant deux orifices adjacents d'aires différentes présentent, en aval de ladite pièce de calibrage, des inclinaisons différentes par rapport à ladite pièce de calibrage. Par conséquent, lesdits orifices permettent de maîtriser le débit d'éjection et, également, d'obtenir un échange thermique favorable entre l'air chaud éjecté et l'air ambiant extérieur, tout en contrôlant l'éclatement du jet d'air chaud afin de l'écarter des structures de la nacelle sensibles à la température. On évite ainsi les inconvénients des orifices des dispositifs de dégivrage connus, qui :
- quand ils se présentent sous la forme d'un orifice circulaire, concentrent trop la section d'éjection et procurent une surface d'échange réduite entre le jet d'air de dégivrage et l'air extérieur ambiant, l'énergie dudit jet étant trop importante de sorte que celui-ci risque d'atteindre les structures sensibles à la température et de les endommager ; et
- quand ils sont éclatés, en une multitude d'orifices, engendrent des émissions acoustiques, une traînée aérodynamique préjudiciable aux performances de l'aéronef, même lorsque le circuit de dégivrage ne fonctionne pas, et des risques de brûlures du capot autour desdits orifices.

On notera en effet que, grâce aux différences d'inclinaison desdits jets d'air chaud par rapport à ladite pièce de calibrage, la pénétration de l'écoulement aérodynamique frais entre ceux-ci est aisée, ce qui les refroidit efficacement et évite, ou à tout le moins réduit, la génération d'une traînée parasite et de bruits acoustiques.

On notera par ailleurs que, grâce à l'invention, l'extension longitudinale de ladite pièce de calibrage peut être choisie pour que l'échauffement de la surface externe du capot, en aval de ladite pièce, dû au rayonnement thermique desdits jets d'air chaud, reste inférieur à un seuil de température déterminé, apte à éviter les détériorations thermiques de ladite surface.

Dans un mode de réalisation particulier, lesdits orifices forment un agencement tel que de plus au moins un jet d'air chaud sous pression traversant un orifice (latéral ou non) de ladite pièce de calibrage est absorbé, en aval de celle-ci, par au moins un jet d'air chaud sous pression traversant un orifice occupant une position adjacente, par exemple moins latérale, dans ladite pièce de calibrage.

En outre, dans un mode de réalisation avantageux, lesdits orifices présentent une forme oblongue et sont orientés au moins sensiblement longitudinalement, c'est-à-dire d'avant en arrière du capot.

Comme indiqué précédemment, l'aire de chaque orifice dépend de la position de celui-ci dans ledit agencement, et cette aire est variable en fonction de la position plus ou moins latérale dudit orifice. De préférence, l'aire est d'autant plus petite que la position de l'orifice est plus latérale et d'autant plus grande que la position dudit orifice est plus centrale, l'inverse étant toutefois également possible.

Grâce à cette disposition, l'énergie d'un jet d'air chaud est d'autant plus grande que l'aire de l'orifice correspondant est plus grande, de sorte que :
- l'inclinaison d'un jet d'air chaud par rapport à ladite pièce de calibrage dépend de l'aire de l'orifice traversé par ledit jet, un jet correspondant à un orifice de plus grande aire étant plus écarté de la surface du capot qu'un jet correspondant à un orifice de plus petite aire ; et
- les jets d'air de plus faible énergie, notamment les jets d'air chaud latéraux, peuvent être absorbés par les jets plus énergétiques.

Les bords avant desdits orifices de l'agencement peuvent être au moins approximativement alignés parallèlement audit bord d'attaque et lesdits orifices peuvent présenter une forme au moins approximativement rectangulaire.

Par ailleurs, pour optimiser la pénétration de l'écoulement aérodynamique entre lesdits jets et donc les échanges thermiques entre ledit écoulement et ces derniers, il est avantageux que chaque orifice oblong soit orienté au moins sensiblement parallèlement aux lignes de courant, dudit écoulement aérodynamique qui s'écoule sur ladite pièce de calibrage, par exemple lorsque l'aéronef est en vol de croisière.

Dans un mode de réalisation, particulièrement simple et efficace, du capot conforme à la présente invention, ledit agencement d'orifices comporte au moins un grand orifice central, deux petits orifices latéraux disposés de part et d'autre dudit orifice central et deux orifices intermédiaires, dont l'aire et la position sont respectivement comprises entre celles dudit grand orifice central et celles desdits petits orifices latéraux.

On notera que le nombre d'orifices dépend des dimensions de la pièce de calibrage. En effet, plus la longueur de cette pièce est petite, plus l'efficacité de l'échangeur de chaleur (constitué par les orifices) doit être grande. On peut alors être amené à faire varier le nombre d'orifices pour obtenir l'effet désiré. Inversement, plus la longueur de la pièce de calibrage est importante, plus le nombre d'orifices peut être diminué, la qualité de l'échangeur de chaleur étant alors moins dimensionnante.

Bien entendu, dans le cadre de la présente invention, le nombre total d'orifices peut être pair ou impair. Toutefois, de préférence, ledit nombre d'orifices est impair. Ceci permet en particulier d'accroître l'efficacité, car les jets latéraux contribuent alors, par effet de soulèvement, à soulever le jet central.

En outre, de façon avantageuse, ledit agencement d'orifices est symétrique, de préférence par rapport à un plan longitudinal qui, dans le cas d'un nombre impair d'orifices, passe par l'orifice central et, dans le cas d'un nombre pair, passe au milieu des deux orifices centraux.

Afin d'optimiser la protection thermique procurée par ladite pièce de calibrage tout en minimisant la masse de celle-ci, il est avantageux qu'au moins l'un des bords longitudinaux de ladite pièce de calibrage présente la forme des lignes de courant, de l'écoulement aérodynamique qui s'écoule sur ladite pièce de calibrage, lorsque l'aéronef est en vol de croisière.

De préférence, ledit conduit en forme d'auge se trouve périphériquement au voisinage de ladite conduite d'amenée de l'air chaud sous pression. Ainsi, ledit air chaud parcourt la totalité de la circonférence dudit bord d'attaque et on obtient une distribution très homogène dudit air chaud à l'intérieur de ce dernier et, donc, des performances de dégivrage élevées.

Ladite pièce de calibrage peut de plus former la porte d'inspection de ladite conduite d'amenée d'air chaud. On bénéficie donc de la présence, obligatoire pour l'accès à la tuyauterie d'air de dégivrage, d'un panneau démontable et résistant aux températures élevées, situé immédiatement en arrière desdits orifices d'éjection. Comme mentionné ci-dessus, une telle porte peut s'étendre longitudinalement dans la surface externe du capot sur une longueur suffisante pour protéger toute la partie de cette surface pouvant être soumise à l'action du flux d'air chaud éjecté par lesdits orifices. De plus, en prévoyant plusieurs panneaux démontables pourvus d'agencements d'orifices d'éjection différents, on peut facilement remplacer un panneau par un autre et tester différents agencements d'orifices d'éjection.

Par ailleurs, il est avantageux que ledit conduit en forme d'auge s'évase en direction de la périphérie externe dudit capot. Ainsi, il peut présenter une forme aérodynamique favorisant l'éjection d'air.

Ledit conduit en forme d'auge peut faire partie intégrante de ladite cloison interne et être par exemple réalisé par emboutissage de celle-ci. Il peut également être constitué par une pièce rapportée à ladite cloison interne, dans un évidement de celle-ci.

On voit ainsi que le bord d'attaque du capot conforme à la présente invention est homogène sur les 360° de sa circonférence, sans excroissance, ni orifice de ventilation, ce qui préserve ses qualités aérodynamiques et de résistance mécanique.

Les figures du dessin annexé feront bien comprendre comment l'invention peut être réalisée. Sur ces figures, des références identiques désignent des éléments semblables.
La figure 1 montre, en perspective éclatée, un exemple de moteur d'aéronef à réaction et ses différents capotages.
Les figures 2 et 3 sont des vues en perspective partielle de l'avant, avec arrachement, de deux modes de réalisation du capot d'entrée d'air conforme à la présente invention.
La figure 4 est une vue de face, illustrant un mode de réalisation avantageux de l'agencement d'orifices d'éjection conforme à la présente invention.
La figure 5 illustre en vue en perspective partielle, agrandie et schématique, l'action de l'agencement d'orifices d'éjection conforme à la présente invention.
La figure 6 illustre, en vue semblable à la figure 5, une variante d'action de l'agencement d'orifices d'éjection conforme à la présente invention.
La figure 7 est une vue en perspective de l'avant, avec arrachement, d'un mode de réalisation du capot d'entrée d'air conforme à la présente invention.
La figure 8 est une demi-coupe, schématique et partielle, de la partie avant d'un capot d'entrée d'air conforme à la présente invention.
La figure 9 montre, en vue en plan partielle de la figure 8, une variante de réalisation de l'agencement d'orifices d'éjection conforme à l'invention.
La figure 10 est une vue en perspective de l'avant, avec arrachement, d'une variante de réalisation du capot d'entrée d'air conforme à la présente invention, correspondant aux figures 8 et 9.
Les figures 11 et 12 montrent, en vue semblable aux figures 4 et 9, deux autres variantes de réalisation de l'agencement d'orifices d'éjection conformes à la présente invention.

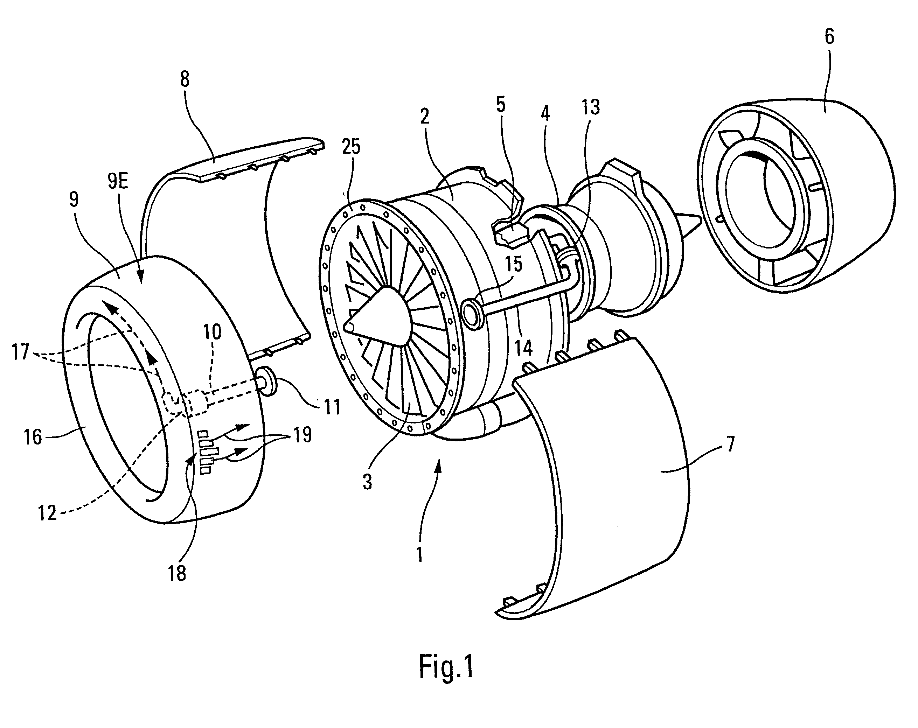

Le moteur à double flux 1 représenté schématiquement sur la figure 1 comporte, de façon connue, un générateur central d'air chaud 2, un ventilateur 3 et des étages de compresseurs 4, et il est pourvu d'une attache 5 de suspension à un mât de support (non représenté). Au moteur 1 sont associés et fixés un ensemble de tuyère 6, deux capots latéraux 7 et 8 et un capot d'entrée d'air 9.

Comme cela est illustré schématiquement sur la figure 1, le capot d'entrée d'air 9 comporte une conduite interne 10, pourvue à son extrémité arrière dirigée vers le moteur 1 d'un élément de raccord 11 et à son extrémité avant logée dans le bord d'attaque creux 16 dudit capot d'entrée d'air d'un injecteur 12. Par ailleurs, sur un étage de compresseurs du moteur 1 est agencée une prise d'air chaud sous pression 13 qui est connectée à une conduite 14, pourvue, en regard de l'élément de raccord 11 de la conduite 10, d'un élément de raccord complémentaire 15.

Ainsi, lorsque les éléments de raccord 11 et 15 complémentaires sont reliés l'un à l'autre, de l'air chaud (par exemple à une température de 400°C) prélevé en 13 sur le moteur 1 est acheminé par les conduites 14 et 10 jusqu'à l'injecteur 12. Celui-ci peut donc souffler cet air chaud sous pression (flèches pointillées 17) à l'intérieur du bord d'attaque 16, pour le dégivrer. Un agencement 18 d'orifices oblongs est prévu, conformément à la présente invention, dans la surface externe 9E du capot 9 pour l'évacuation à l'air libre (flèches 19) de l'air chaud ayant circulé à l'intérieur du bord d'attaque 16 (alors par exemple à une température de 200°C).

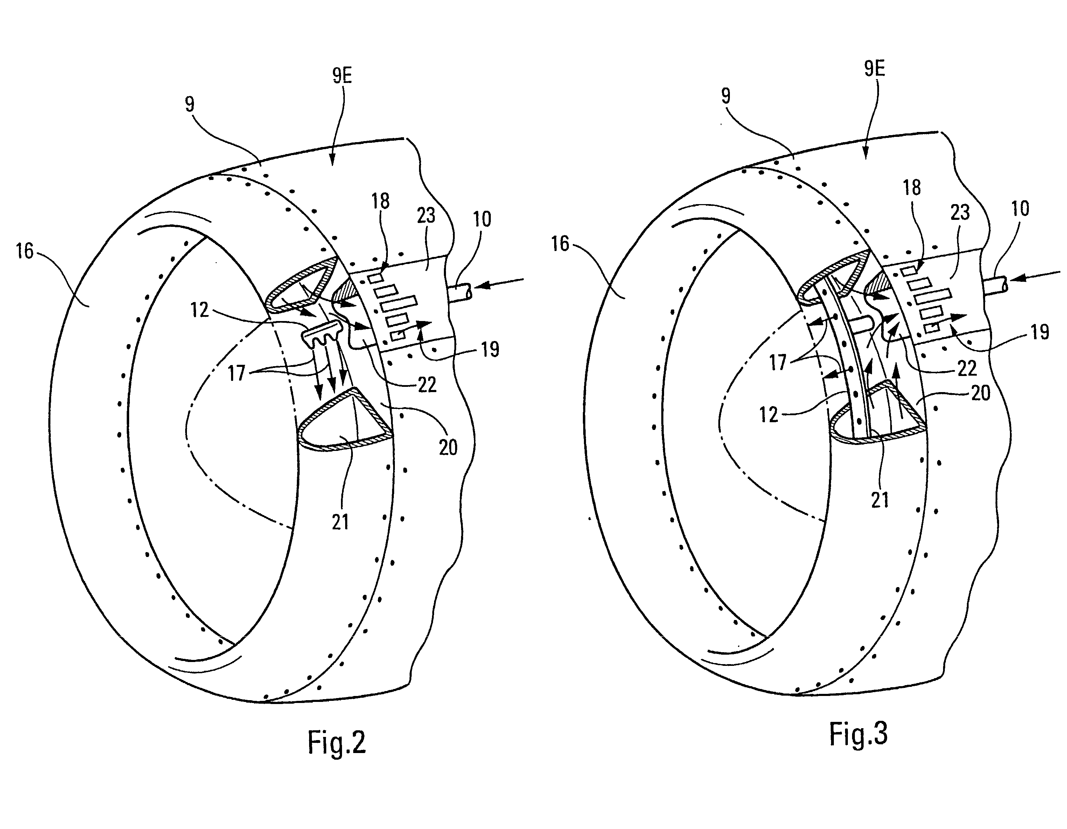

Comme le montrent en détail et à plus grande échelle les figures 2, 3, 5, 7 et 8, le bord d'attaque creux 16 est fermé du côté arrière par une cloison interne 20, de sorte qu'une chambre périphérique annulaire 21 est formée à l'intérieur dudit bord d'attaque 16. L'injecteur 12 injecte l'air chaud sous pression dans la chambre 21 et l'agencement d'orifices oblongs 18 met en communication ladite chambre 21 avec l'extérieur.

La cloison interne 20 est pourvue d'un conduit 22 en forme d'auge, dirigé et s'évasant vers l'arrière dudit bord d'attaque 16, c'est-à-dire du côté du capot 9 proprement dit, et ouvert en direction de la périphérie dudit capot d'entrée d'air 9. Le conduit 22 peut être réalisé par enfoncement de ladite cloison interne 20, par exemple par emboutissage, ou bien peut être constitué par une pièce rapportée à ladite cloison 20.

L'agencement d'orifices oblongs 18 est pratiqué dans une pièce de calibrage 23 faisant partie de la surface externe 9E du capot 9, en arrière du bord d'attaque 16, et il se trouve en regard du conduit 22 en limitant et calibrant la section de celui-ci.

Ainsi, l'air chaud ayant réchauffé le bord d'attaque 16 est amené par le conduit 22 à l'agencement d'orifices 18, qui l'évacue vers l'extérieur en en contrôlant le débit.

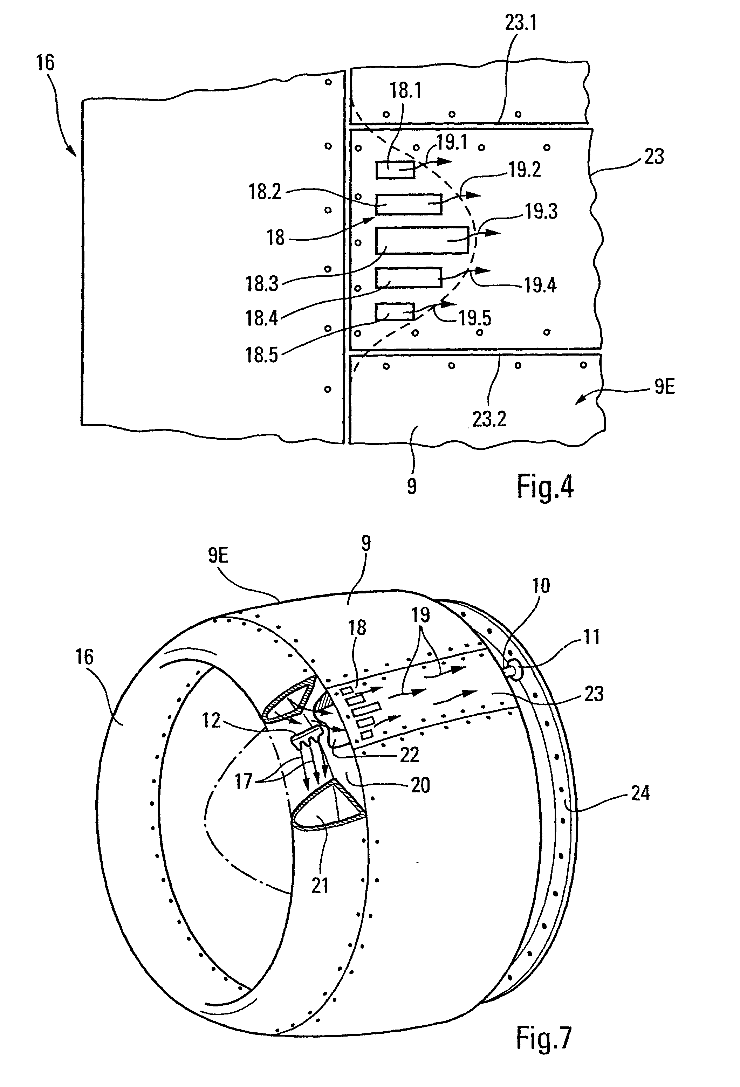

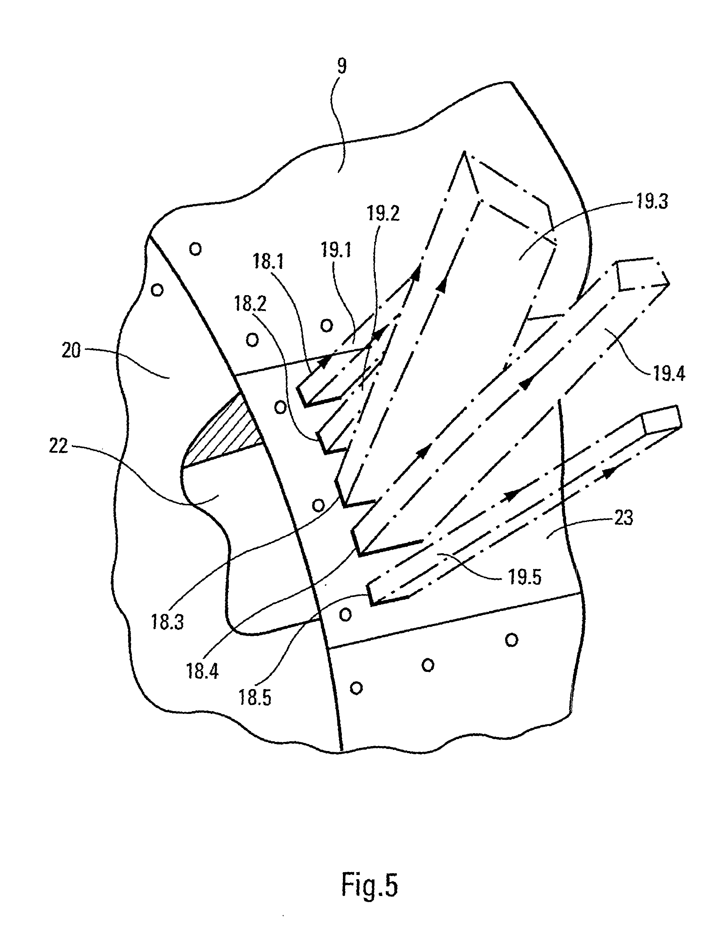

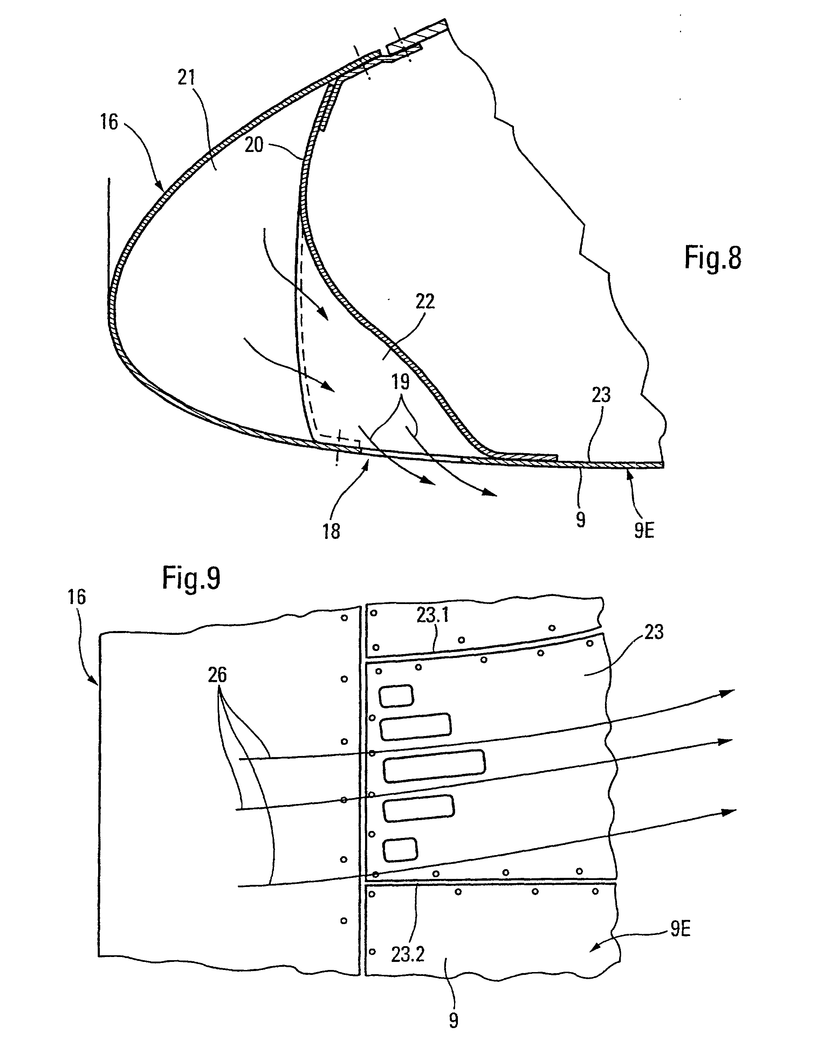

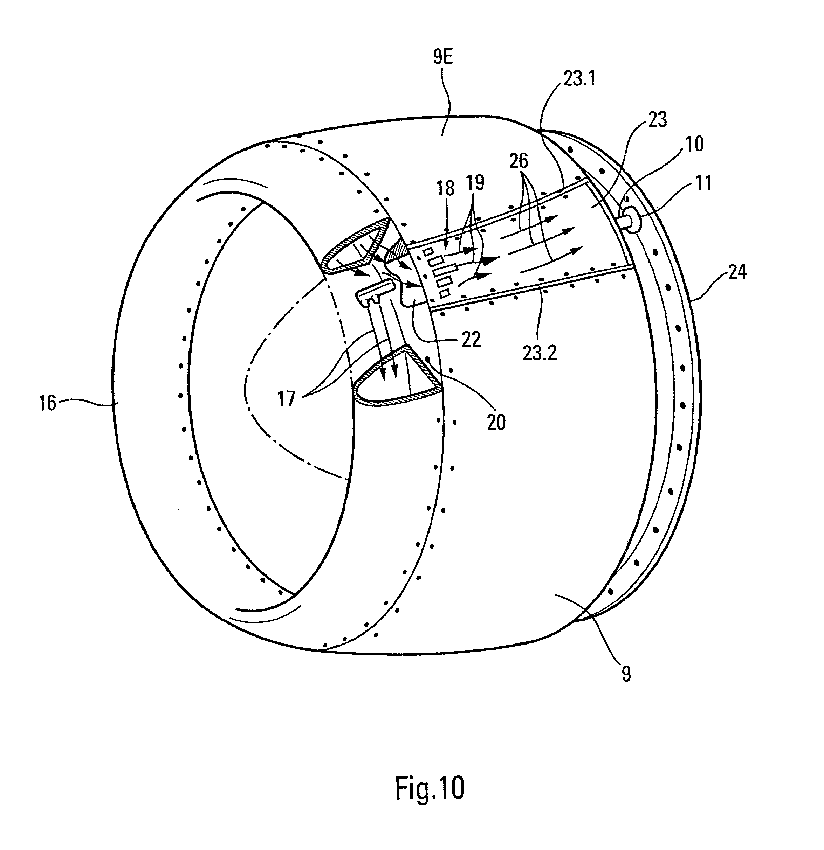

Les figures 2 et 3 montrent que l'injecteur 12 peut être quelconque : par exemple, il comporte des buses multiples (figure 2) ou il est constitué par un anneau percé (figure 3). Elles montrent également, ainsi que les figures 4 et 5, que le conduit 22 se trouve périphériquement au voisinage de la conduite 10. Ainsi, bien que la pièce de calibrage 23 puisse être spécialement prévue pour obturer le conduit 22 (voir les figures 2 et 3), elle peut avantageusement constituer la porte prévue dans le capot 9 pour l'inspection de la conduite 10, comme cela est montré sur les figures 7 et 10. Dans les deux cas, la pièce 23 est en une matière résistant au feu et à la chaleur, par exemple une matière métallique. La pièce 23 peut s'étendre sur toute la longueur du capot 9. Sur les figures 7 et 10, on a représenté la bride 24 susceptible de coopérer avec la bride avant 25 du moteur, pour fixer ledit capot d'entrée d'air 9 à ce dernier.

Dans l'exemple représenté sur les figures 1 à 7, l'agencement 18 comporte cinq orifices 18.1 à 18.5, en forme de fentes rectangulaires dont les bords avant sont alignés parallèlement au bord d'attaque 16 (voir notamment la figure 4 et la figure 7 correspondante). Les orifices 18.1 à 18.5 sont parallèles entre eux, ainsi qu'à l'axe longitudinal du capot 9 (non représenté). L'agencement 18 comporte de petits orifices latéraux 18.1 et 18.5, un grand orifice central 18.3 et deux orifices intermédiaires 18.2 et 18.4, qui sont disposés respectivement entre ledit grand orifice central 18.3 et lesdits petits orifices latéraux 18.1 et 18.5 et dont l'aire est comprise entre celles desdits petits orifices 18.1 et 18.5 et du grand orifice central 18.3.

Ainsi, comme l'illustre la figure 5:
- le jet d'air chaud central 19.3 passant à travers le grand orifice central 18.3 est très énergétique et est fortement écarté de la pièce 23;
- les jets d'air chaud intermédiaires 19.2 et 19.4, passant respectivement à travers les orifices intermédiaires 18.2 et 18.4 sont moins énergétiques que le jet d'air chaud 19.3 et sont également moins écartés de la pièce 23 que ce dernier ; et
- les jets d'air chaud latéraux 19.1 et 19.5, passant respectivement à travers lesdits orifices latéraux 18.1 et 18.5, sont peu énergétiques et sont bien moins écartés de la pièce 23.

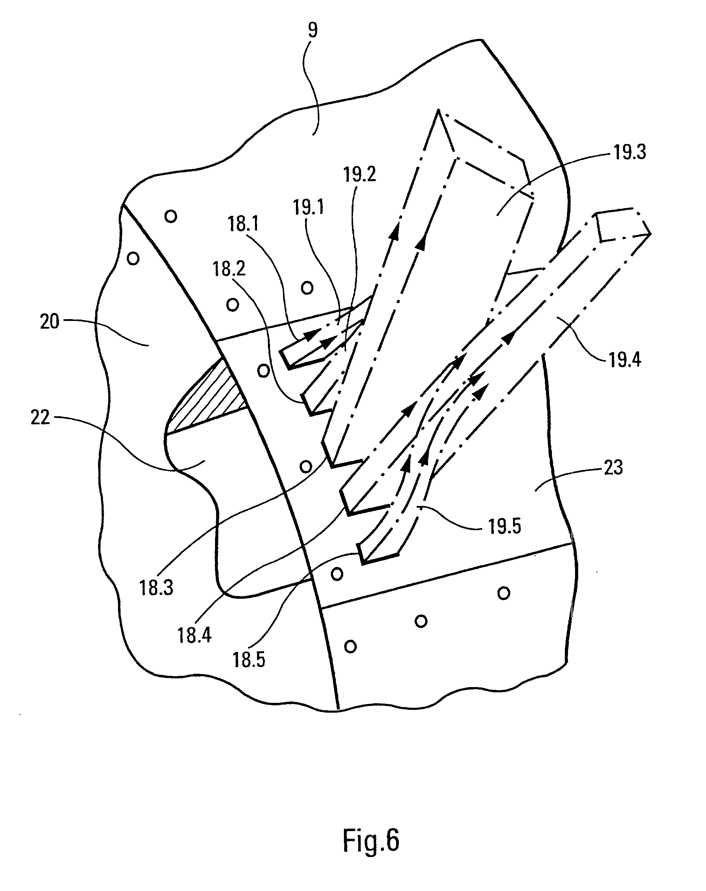

Par ailleurs, le mode de réalisation particulier représenté sur la figure 6 se différencie de celui précité de la figure 5 en ce que certains jets d'air chaud sous pression, en l'occurrence les jets d'air latéraux 19.1 et 19.5, traversant des orifices 18.1 et 18.5 de ladite pièce de calibrage 23 sont absorbés, en aval de celle-ci, par au moins un jet d'air chaud sous pression 19.2 et 19.4 traversant un orifice 18.2 et 18.4 occupant une position adjacente, en l'occurrence moins latérale, dans ladite pièce de calibrage 23. Ceci est obtenu par une adaptation de l'aire desdits orifices 18.1 à 18.5.

Dans les modes de réalisation des figures 1 à 7, les orifices 18.1 à 18.5 et les bords latéraux 23.1 et 23.2 de la pièce 23 sont longitudinaux, c'est-à-dire qu'ils s'étendent d'avant en arrière, parallèlement à l'axe longitudinal du capot 9.

En revanche, dans les modes de réalisation des figures 8, 9 et 10, les orifices 18.1 à 18.5 et au moins le bord latéral 23.1 de la pièce 23 sont respectivement orientés et/ou conformés au moins approximativement parallèlement aux lignes de courant 26 de l'écoulement aérodynamique qui s'écoule sur ladite pièce 23, par exemple lorsque l'aéronef comportant le moteur 1 est en vol de croisière.

Bien entendu, le nombre d'orifices dépend des dimensions de la pièce de calibrage 23. En effet, plus la longueur de cette pièce sera petite, et plus l'efficacité de l'échangeur de chaleur (constitué des orifices) devra être grande. On peut alors être amené à faire varier le nombre d'orifices pour obtenir l'effet désiré. Inversement, plus la longueur de la pièce de calibrage 23 sera importante, et plus le nombre d'orifices pourra être diminué, la qualité de l'échangeur de chaleur étant alors moins dimensionnante. Ainsi, au minimum, on pourra prévoir deux orifices d'aire différente, le nombre maximum d'orifices étant dimensionné par la pièce de calibrage 23.

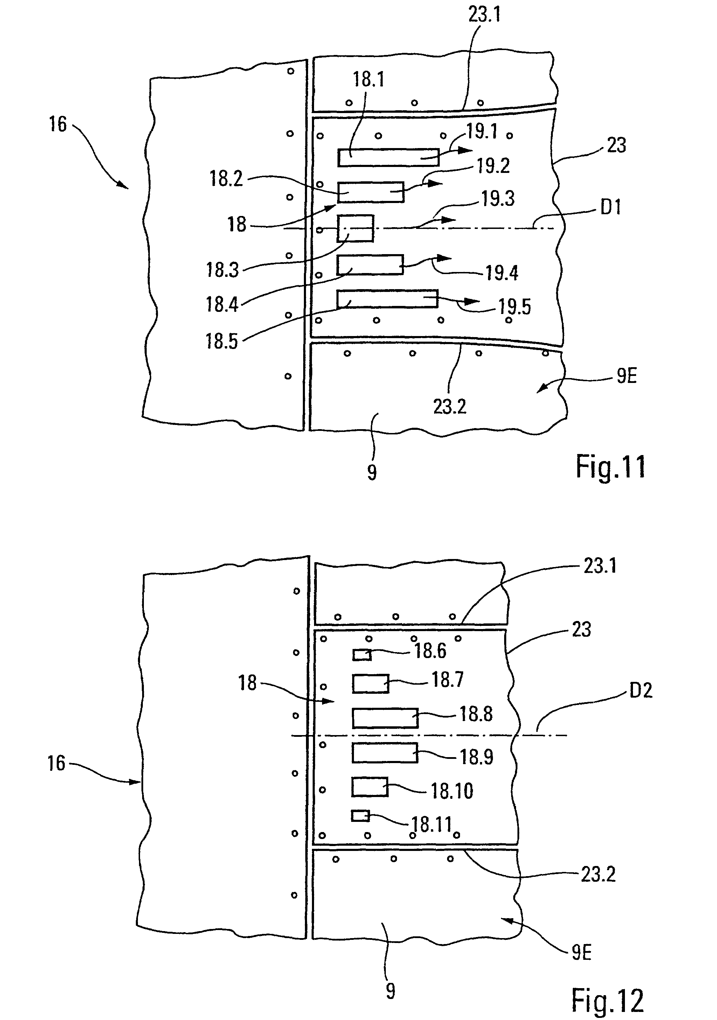

De plus, dans le cadre de la présente invention, le nombre d'orifices peut être pair (figure 12) ou impair (figure 11 par exemple). Toutefois, un nombre impair d'orifices est plus favorable, car les simulations montrent que les jets latéraux contribuent alors, par effet de soulèvement, à soulever le jet central.

En outre, de préférence, bien que non exclusivement, ledit agencement 18 d'orifices est symétrique par rapport à un plan longitudinal, à savoir :
- un plan passant par le centre de l'orifice central 18.3, dans le cas d'un nombre impair d'orifices 18.1 à 18.5, comme illustré par une droite D1 représentant ce plan sur la figure 11; et
- un plan passant par le centre des deux orifices centraux 18.8 et 18.9, dans le cas d'un nombre pair d'orifices 18.6 à 18.11, comme illustré par une droite D2 représentant ce plan sur la figure 12.

On notera de plus que la variation d'aire des orifices peut être soit décroissante vers les orifices latéraux, comme représenté par exemple sur les figures 4, 9 et 12, soit croissante vers lesdits orifices latéraux, comme représenté par exemple sur la figure 11.

Dans ce dernier cas, il convient d'adapter la géométrie de la pièce de calibrage 23.

## Revendications

1. Capot d'entrée d'air (9) pour moteur à réaction (1), notamment pour aéronef, ledit capot d'entrée d'air (9) étant pourvu, à l'avant, de moyens de dégivrage de son bord d'attaque (16) et comportant à cet effet :
- un bord d'attaque (16) creux délimitant une chambre périphérique interne (21) qui est fermée par une cloison interne (20), ladite cloison interne (20) étant pourvue d'un conduit (22) en forme d'auge, dirigé vers l'arrière dudit bord d'attaque (16) et ouvert en direction de la périphérie dudit capot d'entrée d'air (9);
- une conduite (10), apte à être raccordée, à son extrémité arrière opposée audit bord d'attaque (16), à un circuit d'air chaud sous pression (14) et, à son extrémité avant vers ledit bord d'attaque (16), à un injecteur (12) injectant ledit air chaud sous pression dans ladite chambre interne (21); et
- une pièce de calibrage (23) réalisée en un matériau résistant aux températures élevées et faisant partie de la surface externe (9E) dudit capot (9), en arrière dudit bord d'attaque (16), ladite pièce (23) obturant ledit conduit (22) en forme d'auge et étant percée d'au moins deux orifices pour mettre ladite chambre interne (21) en communication avec l'extérieur, lesdits orifices formant un agencement (18), et étant répartis au moins sensiblement parallèlement audit bord d'attaque (16) et servant à calibrer le flux d'air chaud sous pression éjecté par ledit conduit (22) en forme d'auge, tout en écartant dudit capot (9) les jets d'air chaud sous pression résultant du passage dudit flux d'air chaud à travers lesdits orifices,
**caractérisé en ce que** l'aire de chaque orifice dépend de la position de celui-ci dans ledit agencement (18), cette aire étant variable en fonction de la position plus ou moins latérale dans l'agencement dudit orifice, et **en ce que** ladite pièce de calibrage (23) s'étend longitudinalement dans ladite surface externe (9E) dudit capot (9), vers l'arrière de celui-ci, pour servir de protection thermique audit capot vis-à-vis desdits jets d'air chaud traversant lesdits orifices.

2. Capot d'entrée (9) selon la revendication 1,
**caractérisé en ce que** lesdits orifices (18.1 à 18.5) forment un agencement (18) tel qu'au moins un jet d'air chaud sous pression (19.1 et 19.5) traversant un orifice (18.1 et 18.5) de ladite pièce de calibrage (23) est absorbé, en aval de celle-ci, par au moins un jet d'air chaud sous pression (19.2 et 19.4) traversant un orifice (18.2 et 18.4) occupant une position adjacente dans ladite pièce de calibrage (23).

3. Capot d'entrée d'air (9) selon l'une des revendications 1 et 2,
**caractérisé en ce que** lesdits orifices (18.1 à 18.11) présentent une forme oblongue et sont orientés au moins sensiblement longitudinalement par rapport audit capot (9).

4. Capot d'entrée d'air (9) selon l'une des revendications 1 à 3,
**caractérisé en ce que** les bords avant des orifices de l'agencement (18) sont au moins approximativement alignés parallèlement audit bord d'attaque (16).

5. Capot d'entrée d'air (9) selon l'une des revendications 1 à 4,
**caractérisé en ce que** chaque orifice oblong (18.1 à 18.5) est orienté au moins sensiblement parallèlement aux lignes de courant (26) de l'écoulement aérodynamique qui s'écoule sur ladite pièce (23).

6. Capot d'entrée d'air (9) selon l'une des revendications 1 à 5,
**caractérisé en ce que** lesdits orifices (18.1 à 18.11) présentent une forme au moins approximativement rectangulaire.

7. Capot d'entrée d'air (9) selon l'une des revendications 1 à 6,
**caractérisé en ce que** ledit agencement d'orifices (18) comporte au moins un grand orifice central (18.3), deux petits orifices latéraux (18.1 et 18.5) disposés de part et d'autre dudit orifice central et deux orifices intermédiaires (18.2 et 18.4), dont l'aire et la position sont respectivement comprises entre celles dudit grand orifice central et celles desdits petits orifices latéraux.

8. Capot d'entrée d'air (9) selon l'une quelconque des revendications 1 à 7,
**caractérisé en ce que** le nombre d'orifices (18.1 à 18.5) est impair.

9. Capot d'entrée d'air (9) selon l'une quelconque des revendications 1 à 8,
**caractérisé en ce que** ledit agencement (18) d'orifices (18.1 à 18.11) est symétrique.

10. Capot d'entrée d'air (9) selon l'une quelconque des revendications 1 à 9,
**caractérisé en ce qu'**au moins l'un des bords longitudinaux (23.1) de ladite pièce de calibrage (23) présente la forme des lignes de courant (26) de l'écoulement aérodynamique qui s'écoule sur ladite pièce, lorsque ledit aéronef est en vol de croisière.

11. Capot d'entrée d'air (9) selon l'une des revendications 1 à 10,
**caractérisé en ce que** ladite pièce de calibrage (23) est une porte d'inspection de ladite conduite (10).

12. Capot d'entrée d'air (9) selon l'une des revendications 1 à 11,
**caractérisé en ce que** ledit conduit en forme d'auge (22) se trouve périphériquement au voisinage de ladite conduite (10).

13. Capot d'entrée d'air (9) selon l'une des revendications 1 à 12,
**caractérisé en ce que** ledit conduit en forme d'auge (22) s'évase en direction de la périphérie dudit capot d'entrée d'air (9).

14. Capot d'entrée d'air (9) selon l'une des revendications 1 à 13,
**caractérisé en ce que** ledit conduit en forme d'auge (22) fait partie intégrante de ladite cloison interne (20).

15. Capot d'entrée d'air (9) selon l'une des revendications 1 à 13,
**caractérisé en ce que** ledit conduit en forme d'auge (22) est constitué par une pièce rapportée à ladite cloison interne (20).

## Claims

1. Air inlet cowl (9) for a jet engine (1), particularly for an aircraft, said air inlet cowl (9) being equipped, at the front, with means for deicing its leading edge (16) and for this purpose comprising:
- a hollow leading edge (16) delimiting an internal peripheral chamber (21) which is closed by an internal partition (20), said internal partition (20) being equipped with a trough-shaped duct (22) directed toward the rear of said leading edge (16) and open toward the periphery of said air inlet cowl (9);
- a pipe (10) which can be connected, at its rear end which is the opposite end to said leading edge (16), to a pressurized hot air circuit (14) and, at its front end toward said leading edge (16), to an injector (12) injecting said pressurized hot air into said internal chamber (21); and
- a calibration piece (23) made of a material resistant to high temperatures and forming part of the external surface (9E) of said cowl (9), to the rear of said leading edge (16), said piece (23) closing off said trough-shaped duct (22) and being pierced with at least two orifices to place said internal chamber (21) in communication with the outside, said orifices forming an arrangement (18), and being distributed at least roughly parallel to said leading edge (16) and serving to calibrate the flow of pressurized hot air ejected by said trough-shaped duct (22), while deflecting away from said cowl (9) the pressurized hot air jets resulting from the passage of said flow of hot air through said orifices,
**characterized in that** the area of each orifice depends on the position of this orifice in said arrangement (18), this area varying according to how laterally positioned in the arrangement said orifice is, and **in that** said calibration piece (23) extends longitudinally in said external surface (9E) of said cowl (9), toward the rear thereof, to act as thermal protection for said cowl with respect to said hot air jets passing through said orifices.

2. Air inlet cowl (9) according to Claim 1, **characterized in that** said orifices (18.1 to 18.5) form an arrangement (18) such that at least one pressurized hot air jet (19.1 and 19.5) passing through an orifice (18.1 and 18.5) of said calibration piece (23) is absorbed, downstream of this piece, by at least one pressurized hot air jet (19.2 and 19.4) passing through an orifice (18.2 and 18.4) occupying an adjacent position in said calibration piece (23).

3. Air inlet cowl (9) according to either of Claims 1 and 2, **characterized in that** said orifices (18.1 to 18.11) have an oblong shape and are oriented at least approximately longitudinally with respect to said cowl (9).

4. Air inlet cowl (9) according to one of Claims 1 to 3, **characterized in that** the front edges of the orifices of the arrangement (18) are at least roughly aligned parallel to said leading edge (16).

5. Air inlet cowl (9) according to one of Claims 1 to 4, **characterized in that** each oblong orifice (18.1 to 18.5) is oriented at least roughly parallel to the stream lines (26) of the aerodynamic flow flowing over said piece (23).

6. Air inlet cowl (9) according to one of Claims 1 to 5, **characterized in that** said orifices (18.1 to 18.11) have an at least roughly rectangular shape.

7. Air inlet cowl (9) according to one of Claims 1 to 6, **characterized in that** said arrangement of orifices (18) comprises at least one large central orifice (18.3), two small lateral orifices (18.1 and 18.5) arranged on each side of said central orifice and two intermediate orifices (18.2 and 18.4), the area and position of which are respectively between those of said large central orifice and those of said small lateral orifices.

8. Air inlet cowl (9) according to any one of Claims 1 to 7, **characterized in that** the number of orifices (18.1 to 18.5) is an odd number.

9. Air inlet cowl (9) according to any one of Claims 1 to 8, **characterized in that** said arrangement (18) of orifices (18.1 to 18.11) is symmetrical.

10. Air inlet cowl (9) according to any one of Claims 1 to 9, **characterized in that** at least one of the longitudinal edges (23.1) of said calibration piece (23) has the shape of the stream lines (26) of the aerodynamic flow flowing over said piece when said aircraft is in cruising flight.

11. Air inlet cowl (9) according to any one of Claims 1 to 10, **characterized in that** said calibration piece (23) is an inspection hatch for said pipe (10).

12. Air inlet cowl (9) according to any one of Claims 1 to 11, **characterized in that** said trough-shaped duct (22) is peripherally in the vicinity of said pipe (10).

13. Air inlet cowl (9) according to any one of Claims 1 to 12, **characterized in that** said trough-shaped duct (22) widens toward the periphery of said air inlet cowl (9).

14. Air inlet cowl (9) according to any one of Claims 1 to 13, **characterized in that** said trough-shaped duct (22) forms an integral part of said internal partition (20).

15. Air inlet cowl (9) according to any one of Claims 1 to 13, **characterized in that** said trough-shaped duct (22) consists of a piece attached to said internal partition (20).

## Patentansprüche

1. Lufteinlasshaube (9) für ein Strahltriebwerk (1), insbesondere für Luftfahrzeuge, wobei die Lufteinlasshaube (9) vorderseitig mit Enteisungsvorrichtungen für ihre Eintrittskante (16) versehen ist und zu diesem Zweck Folgendes aufweist:
- eine hohlförmige Eintrittskante (16), die eine peripherische Innenkammer (21) abgrenzt, die mit einer Innentrennwand (20) abschließt, wobei die Innentrennwand (20) mit einem trogförmigen Kanal (22) versehen ist, der zum hinteren Teil der Eintrittskante (16) führt und zum Umfang der Lufteinlasshaube (9) hin offen ist;
- eine Leitung (10), die dazu geeignet ist, mit ihrem hinteren, von der Eintrittskante (16) entfernten Ende, an einen Kreislauf mit heißer Druckluft (14) angeschlossen zu werden und mit ihrem vorderen, zur Eintrittskante (16) gerichteten Ende, an einen Injektor (12), der die heiße Druckluft in die Innenkammer (21) einbläst; und
- ein Kalibrierelement (23), das aus einem hochtemperaturbeständigen Material gefertigt ist und Teil der hinter der Eintrittskante (16) befindlichen Außenfläche (9E) der Lufteinlasshaube (9) ist, wobei das Kalibrierelement (23) den trogförmigen Kanal (22) abschließt und mit mindestens zwei Öffnungen versehen ist, um die Innenkammer (21) mit der Außenumgebung zu verbinden, wobei die Öffnungen eine Anordnung (18) bilden und zumindest im Wesentlichen parallel zur Eintrittskante (16) verteilt sind und dazu dienen, den Strom mit der heißen Druckluft zu kalibrieren, der von dem trogförmigen Kanal (22) ausgeblasen wird, wobei die heißen Druckluftstrahlen, die entstehen, wenn der Heißluftstrom durch die Öffnungen strömt, von der Lufteinlasshaube weggeleitet werden,
**dadurch gekennzeichnet, dass** die Querschnittsfläche jeder Öffnung von ihrer Position in der Anordnung (18) abhängt, wobei diese Querschnittsfläche in Abhängigkeit davon variiert, wie weit seitlich die Öffnung in der Anordnung liegt, und dass das Kalibrierelement (23) sich in Längsrichtung in der Außenfläche (9E) der Lufteinlasshaube (9) zu ihrem hinteren Teil hin erstreckt, um die Lufteinlasshaube vor der Wärme der Heißluftstrahlen zu schützen, die durch die Öffnungen strömen.

2. Lufteinlasshaube (9) gemäß Anspruch 1,
**dadurch gekennzeichnet, dass** die Öffnungen (18.1 bis 18.5) eine Anordnung (18) bilden, die so beschaffen ist, dass mindestens ein Luftstrahl mit heißer Druckluft (19.1 und 19.5), der durch eine Öffnung (18.1 und 18.5) des Kalibrierelements (23) strömt, hinter diesem von mindestens einem Luftstrahl mit heißer Druckluft (19.2 und 19.4), der durch eine Öffnung (18.2 und 18.4) an einer benachbarten Stelle im Kalibrierelement (23) strömt, absorbiert wird.

3. Lufteinlasshaube (9) gemäß einem der Ansprüche 1 und 2,
**dadurch gekennzeichnet, dass** die Öffnungen (18.1 bis 18.11) eine längliche Form aufweisen und zumindest im Wesentlichen in Längsrichtung der Lufteinlasshaube (9) ausgerichtet sind.

4. Lufteinlasshaube (9) gemäß einem der Ansprüche 1 bis 3,
**dadurch gekennzeichnet, dass** die vorderen Ränder der Öffnungen der Anordnung (18) zumindest annähernd parallel zur Eintrittskante (16) ausgerichtet sind.

5. Lufteinlasshaube (9) gemäß einem der Ansprüche 1 bis 4,
**dadurch gekennzeichnet, dass** jede längliche Öffnung (18.1 bis 18.5) zumindest im Wesentlichen parallel zu den Stromlinien (26) der aerodynamischen Strömung ausgerichtet sind, die am Kalibrierelement (23) auftritt.

6. Lufteinlasshaube (9) gemäß einem der Ansprüche 1 bis 5,
**dadurch gekennzeichnet, dass** die Öffnungen (18.1 bis 18.11) eine zumindest annähernd rechteckige Form aufweisen.

7. Lufteinlasshaube (9) gemäß einem der Ansprüche 1 bis 6,
**dadurch gekennzeichnet, dass** die Anordnung mit den Öffnungen (18) mindestens eine große mittige Öffnung (18.3), zwei kleine seitliche Öffnungen (18.1 und 18.5), die zu beiden Seiten der mittigen Öffnung angeordnet sind, und zwei mittlere Öffnungen (18.2 und 18.4) aufweist, deren Querschnittsfläche und Position jeweils zwischen denen der großen mittigen Öffnung und denen der kleinen seitlichen Öffnungen liegen.

8. Lufteinlasshaube (9) gemäß einem beliebigen der Ansprüche 1 bis 7,
**dadurch gekennzeichnet, dass** die Anzahl der Öffnungen (18.1 bis 18.5) ungerade ist.

9. Lufteinlasshaube (9) gemäß einem beliebigen der Ansprüche 1 bis 8,
**dadurch gekennzeichnet, dass** die Anordnung (18) mit den Öffnungen (18.1 bis 18.11) symmetrisch ist.

10. Lufteinlasshaube (9) gemäß einem beliebigen der Ansprüche 1 bis 9,
**dadurch gekennzeichnet, dass** mindestens einer der Längsränder (23.1) des Kalibrierelements (23) die Form der Stromlinien (26) der aerodynamischen Strömung aufweist, die am Kalibrierelement auftritt, wenn sich das Luftfahrzeug im Zielanflug befindet.

11. Lufteinlasshaube (9) gemäß einem der Ansprüche 1 bis 10,
**dadurch gekennzeichnet, dass** das Kalibrierelement (23) eine Inspektionstür der Leitung (10) ist.

12. Lufteinlasshaube (9) gemäß einem der Ansprüche 1 bis 11,
**dadurch gekennzeichnet, dass** sich der trogförmige Kanal (22) am Umfang, in der Nähe der Leitung (10) befindet.

13. Lufteinlasshaube (9) gemäß einem der Ansprüche 1 bis 12,
**dadurch gekennzeichnet, dass** der trogförmige Kanal (22) zum Umfang der Lufteinlasshaube (9) hin breiter wird.

14. Lufteinlasshaube (9) gemäß einem der Ansprüche 1 bis 13,
**dadurch gekennzeichnet, dass** der trogförmige Kanal (22) Grundbestandteil der Innentrennwand (20) ist.

15. Lufteinlasshaube (9) gemäß einem der Ansprüche 1 bis 13,
**dadurch gekennzeichnet, dass** der trogförmige Kanal (22) von einem in die Innentrennwand (20) eingebrachten Teil gebildet wird.
